# DEMANDE DE BREVET EUROPEEN

(11) **EP 0 599 430 A1**
(43) Date de publication de la demande: **01.06.1994**
(21) Numéro de dépôt: 93203305.3
(22) Date de dépôt: 26.11.1993
(51) Int. Cl.: A01C 23/02

(54) **Patin d'épandage de lisier ou autres engrais**

(30) Priorité: 27.11.1992 BE 9201040
(71) Demandeur: ETS JOSKIN S.A., B-4630 Soumagne (BE)
(72) Inventeur: Joskin, Victor, B-4630 Soumagne (BE)
(74) Mandataire: Vanderperre, Robert

(57) **Abrégé**

Un patin d'épandage de lisier ou autres engrais en prairies, comprend au moins une goulotte traînante (7) suspendue au dispositif de manière à présenter un angle d'attaque au sol (α) aigu par rapport au sens de marche dans lequel travaille le patin. La goulotte traînante possède une extrémité antérieure à profil effilé de manière à écarter les brins d'herbe pour y tracer un couloir (22) et y déposer le lisier ou autre engrais en ligne entre les brins d'herbe et à même le sol, sans risque d'éclaboussure. Le dispositif de suspension de la goulotte traînante (7) est agencé de manière à faire varier l'inclinaison de la goulotte de manière à maintenir la base de celle-ci bien à plat sur le sol.

## Description

La présente invention est relative aux dispositifs d'épandage et d'injection de lisier ou autres engrais en prairies, et en particulier à un patin pour de tels dispositifs.

On connaît différents modèles de patins destinés à déposer le lisier directement à la base de la végétation ou à très faible profondeur. Mais tous les modèles connus présentent des défauts en matière de bourrage, de dégats occasionnés à la pelouse et de précision d'épandage, consécutifs à leur conception recourbée vers le sens de marche. Ces patins sont susceptibles d'arracher la végétation quand celle-ci présente un enchevêtrement de racines et de résidus ou quand le sol présente une dénivellation. De plus, il agit littéralement à la manière d'une pelle, ramassant l'herbe et la terre arrachées ainsi que tous déchets trouvés sur son passage et accumulant le tout au creux de sa courbe et même sur tout son pourtour; cet amas finit par traîner derrière le patin, risquant ainsi de disperser le lisier déposé. Enfin, une partie de cet amas se détache de temps à autre, laissant çà et là des paquets de déchets qui entraînent la mort de la végétation à cet endroit et provoquent des amas de pourriture pour la récolte suivante.

L'invention a pour but de remédier à ces inconvénients en proposant un patin mobile offrant le plus faible risque de bourrage, de dommages à la végétation et de dispersion intempestive du lisier déposé.

Ce but est atteint, suivant l'invention, par un patin d'épandage comportant au moins une goulotte d'épandage traînante suspendue au dispositif de manière à présenter un angle d'attaque au sol (α) aigu par rapport au sens de marche dans lequel travaille le patin.

La goulotte traînante possède une extrémité antérieure à profil effilé de manière à démêler et écarter les brins d'herbe pour tracer un couloir dans la pelouse et y déposer le lisier ou autre engrais en ligne entre les brins d'herbe et à même le sol, sans risque d'éclaboussure. Le dispositif de suspension de la goulotte traînante est agencé de manière à faire varier l'inclinaison de la goulotte de manière à maintenir la base de celle-ci bien à plat sur le sol.

L'invention est décrite dans ce qui suit avec plus de détails à l'aide des dessins annexés dans lesquels :
la figure 1 montre une vue d'ensemble d'un patin d'épandage suivant l'invention;
la figure 2 montre le dispositif de la figure 1, dans lequel le patin a rencontré une dénivellation montante du sol;
la figure 3 montre le dispositif de la figure 1, dans lequel le patin a rencontré un creux dans le sol;
la figure 4 est une vue en plan d'un patin d'épandage équipé de deux goulottes;
la figure 5 montre le patin d'épandage de la figure 1 en position de repos;
les figures 6 et 7 sont des vues respectivement en plan et en coupe d'une goulotte suivant l'invention, illustrant un épandage de lisier.

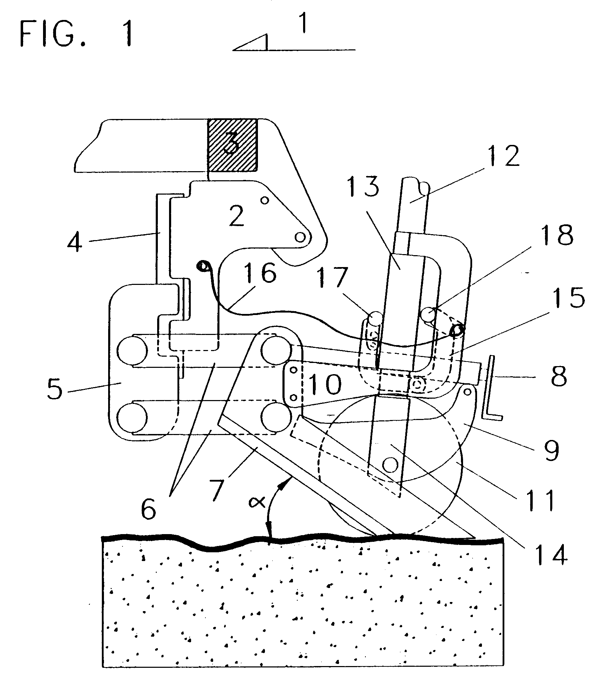

Le patin d'épandage selon l'invention est représenté schématiquement à la figure 1. La flèche 1 désigne le sens de progression dans lequel travaille l'invention.

L'ensemble du système de patin se monte sur un châssis quelconque 3 par une patte de fixation 2 enserrant un axe tournant 4. La patte de fixation 2 soutient l'appui 5 d'un système parallélogramme 6 auquel est fixé un dispositif dont il permet de préserver l'angle d'attaque par rapport au sol. Le dispositif d'épandage se compose essentiellement d'une goulotte traînante 7, d'un cric de réglage 8 disposé verticalement à l'avant de la goulotte et dans l'axe de celle-ci, et des supports de fixation 9 et 10. Le support 9 soutient l'axe d'une roue de jauge 11. Le support 10 soutient la tuyauterie d'amenée du lisier, à savoir une conduite d'alimentation 12, suivie d'une section de tuyau souple 13 en caoutchouc, puis de la bouche de dépôt de lisier 14. Au niveau du tuyau souple 13 est encore fixé un système de fermeture à pincette 15, actionné par un câble 16 reliant les deux mâchoires 17 et 18 à la patte de fixation 2.

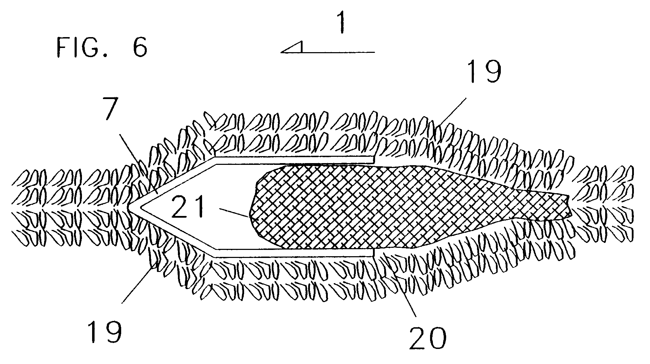

L'utilisation du système suppose qu'il soit mis en mouvement au sein d'un charroi quelconque et qu'il soit alimenté en lisier. En fonctionnement, la goulotte 7 repose sur le sol et est traînée dans le sens de progression 1 du charroi. La goulotte 7 est dotée d'une extrémité antérieure ayant un profil effilé (visible sur la vue en plan de la figure 6) de manière à démêler et écarter les brins d'herbe, formant une sorte de "couloir" dans la pelouse et cela sans possibilité de bourrage. Dans le même temps, le lisier amené par la conduite d'alimentation 12, le tuyau 13 et la bouche 14, tombe au creux de la goulotte traînante 7, d'où il coule sans éclaboussure dans le "couloir" formé dans la pelouse.

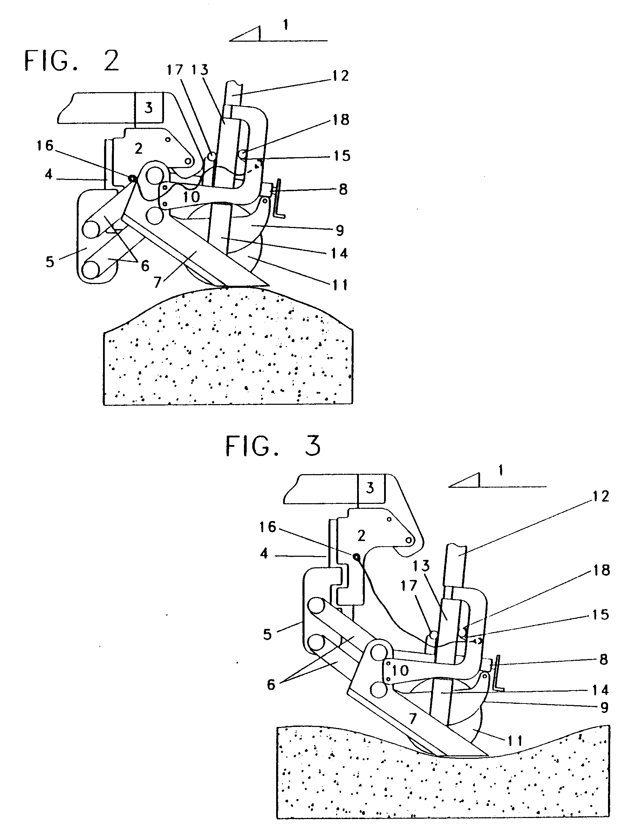

Le système parallélogramme 6 permet à tout moment de conserver la pente mathématique de la goulotte 7 avec un angle d'attaque au sol α prédéterminé, d'environ 40° par exemple, de manière que la base de la goulotte 7 se trouve toujours bien à plat sur le sol, évitant ainsi d'endommager la pelouse ou le sol. Ceci s'applique aussi bien lorsque l'on modifie la hauteur de travail que lorsque le patin rencontre une dénivellation montante dans le terrain, comme représenté en figure 2. Sur cette dernière figure, on observe également l'importance du design de la patte de fixation 2, qui offre un débattement vers le haut très important à l'ensemble du patin, afin d'éviter tout risque de bris ou de bourrage dans les dénivellations.

Lorsque le patin rencontre un creux dans la pelouse, le système offre un débattement également très important vers le bas et le parallélogramme maintient la base de la goulotte bien à plat, comme représenté en figure 3.

Dans l'exemple illustré, la goulotte 7 se termine avantageusement par un patin de maintien de la hauteur de travail au sol.

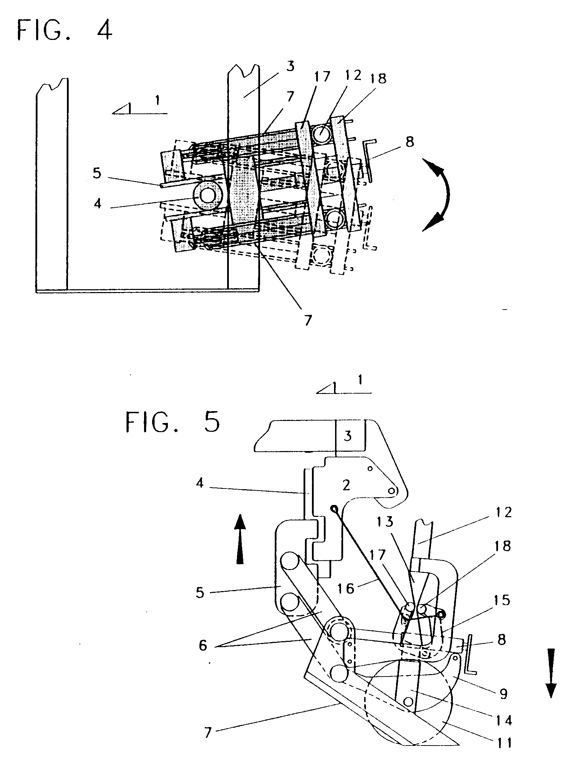

Le pivot vertical 4 laisse la possibilité au patin d'osciller de manière limitée vers la droite et vers la gauche, afin que ce dernier ne subisse aucune pression dommageable dans les virages imprimés par le charroi pendant le travail. En effet, un système rigide subirait une pression du côté inverse à la courbe; il en résulterait un important risque de casser le patin ou d'endommager la pelouse ou le sol. Les patins peuvent être montés individuellement ou être groupés pour former un élément suiveur articulé autour d'un seul pivot 4 comme illustré en figure 4 sur laquelle la double flèche représente la capacité d'oscillation du patin autour du pivot 4.

La figure 5 représente le système de patin en position de repos, c'est-à-dire lorsque le châssis 3 qui le supporte est relevé en position de transport pour le déplacement ou les manoeuvres du charroi. Lorsque le châssis de fixation 3 est relevé, le patin pend littéralement au châssis, ramenant le système parallélogramme 6 dans sa position la plus basse : les mâchoires 17 et 18 pivotent l'une vers l'autre pour assurer la fermeture centrale de la bouche de dépôt de lisier par pincement. L'arrivée de lisier se trouve ainsi automatiquement interrompue dès que la goulotte 7 n'est plus en contact avec le sol. On évite ainsi toute coulée intempestive quand l'appareil ne travaille pas.

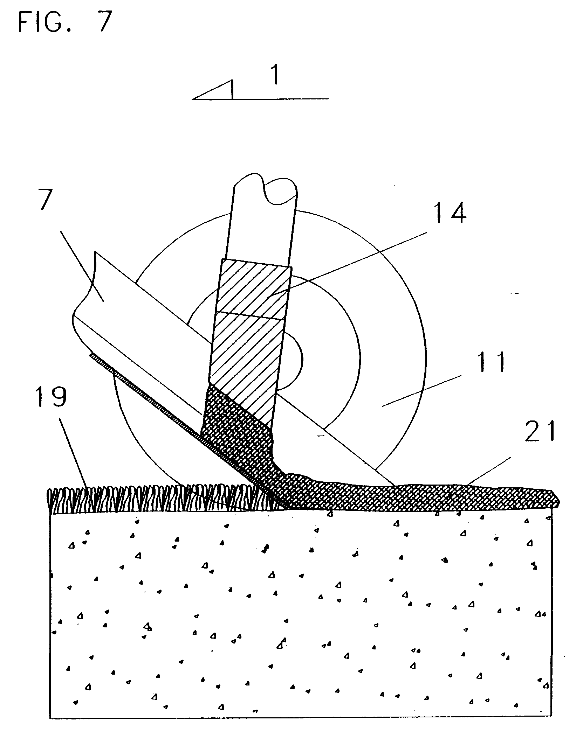

Sur la figure 6 est illustré le couloir 20 formé par la goulotte traînante 7 dans la végétation. L'extrémité antérieure effilée de la goulotte et ses parois latérales permettent d'écarter autant que possible la végétation 19 sans l'arracher, d'éviter que des résidus ne s'accumulent sur le pourtour, et de former un couloir 20 bien net entre les brins d'herbe. C'est dans ce couloir 20 que la goulotte dépose le lisier à même le sol, sans risque d'éclaboussure. La figure 7 illustre le dépôt de lisier 21 dans le couloir 20 formés par un patin d'épandage.

Dans ce qui précède, il a été question d'une seule goulotte traînante pour faciliter la compréhension mais, comme représenté en figure 4, un patin d'épandage de lisier suivant l'invention peut comporter plusieurs goulottes traînantes 7 montées en suiveur et plusieurs éléments-suiveurs peuvent être fixés sur un châssis commun.

## Revendications

1. Patin d'épandage de lisier ou autres engrais en prairies, comprenant au moins une goulotte traînante, caractérisé en ce que la goulotte traînante (7) est suspendue au dispositif de manière à présenter un angle d'attaque au sol (α) aigu par rapport au sens de marche dans lequel travaille le patin.

2. Patin d'épandage suivant la revendication 1, caractérisé en ce que la goulotte traînante (7) possède une extrémité antérieure à profil effilé de manière à écarter les brins d'herbe pour y tracer un couloir (22) et y déposer le lisier ou autre engrais en ligne entre les brins d'herbe et à même le sol, sans risque d'éclaboussure.

3. Patin d'épandage suivant la revendication 1 ou 2, caractérisé en ce que la goulotte traînante (7) est suspendue à un dispositif agencé pour faire varier l'inclinaison de la goulotte de manière à maintenir la base de celle-ci bien à plat sur le sol.
